# EUROPÄISCHE PATENTSCHRIFT

(11) **EP 1 101 089 B1**
(45) Veröffentlichungstag und Bekanntmachung des Hinweises auf die Patenterteilung: **24.09.2003**
(21) Anmeldenummer: 99940099.7
(22) Anmeldetag: 29.07.1999
(51) Int. Cl.: G01M 3/24, G01M 3/36, B07C 5/12, B07C 5/34

(54) **VERFAHREN ZUM PRÜFEN VON VERSCHLOSSENEN BEHÄLTERN**
METHOD FOR MONITORING CLOSED CONTAINERS
PROCEDE DE CONTROLE DE RECIPIENTS FERMES

(30) Priorität: 29.07.1998 DE 19834218
(43) Veröffentlichungstag der Anmeldung: 23.05.2001
(73) Patentinhaber: HEUFT SYSTEMTECHNIK GMBH, 56659 Burgbrohl (DE)
(72) Erfinder: HEUFT, Bernhard, D-56659 Burgbrohl (DE)
(74) Vertreter: Gritschneder, Martin, Dipl.-Phys.
(86) Internationale Anmeldenummer: EP9905532
(87) Internationale Veröffentlichungsnummer: WO00006985

(56) Entgegenhaltungen:
- DE-A- 4 004 965
- US-A- 3 633 742

## Beschreibung

Die Erfindung betrifft ein Verfahren zum Prüfen von verschlossenen Behältern, z.B. des Restluftvolumens oder der Qualität und Dichtigkeit von Verschlüssen, die an Behältern angebracht sind, wobei in dem Verschluß mechanische Schwingungen angeregt werden, die mechanischen Schwingungen analysiert werden, daraus Meßwerte abgeleitet werden, diese Meßwerte mit vorgegebenen Werten für akzeptable Verschlüsse verglichen werden und ein Signal erzeugt wird, das aussagt, ob der Meßwert einem Wert für einen akzeptablen Verschluß entspricht.

Aus DE-A-40 04 965 ist es bekannt, Unterdruck-Verschlüsse mit federndem Deckel, insbesondere Unterdruck-Schraubverschlüsse, auf Dichtigkeit ihrer Anbringung zu überprüfen, indem in dem Deckel mechanische Schwingungen erzeugt werden, die Schwingungen bezüglich ihrer Frequenz, ihrer Periodendauer und/oder ihrer Dämpfung verarbeitet und ausgewertet werden und daraus die Höhe des-Unterdrucks im Behälter ermittelt wird.

Aus US-A-5,353,631 ist ein ähnliches Verfahren zur Messung des Innendrucks eines verschlossenen Behälters bekannt, wobei eine Wand des Behälters angestoßen wird, das Schwingungsspektrum der dadurch erzeugten mechanischen Schwingungen aufgenommen und mit dem zuvor aufgenommenen Schwingungsspektrum von Behältern mit bekannten Innendrücken verglichen wird.

In der Praxis ergeben sich Schwierigkeiten dadurch, daß ein Getränkeabfüllbetrieb die Rohlinge für Schraubverschlüsse oder Kronkorkverschlüsse von verschiedenen Herstellern bezieht und die Rohlinge einzelner Hersteller in der Materialzusammensetzung oder -stärke oder dem auf der Innenseite des Verschlusses angebrachten Compound voneinander abweichen. Solche Abweichungen können auch bei unterschiedlichen Chargen ein und desselben Herstellers auftreten. Diese Abweichungen führen dazu, daß eine bestimmte gemessene Frequenz bei Verschlüssen des einen Herstellers im akzeptablen Bereich, bei denen eines anderen Herstellers dagegen im inakzeptablen Bereich liegen kann, so daß häufig keine sichere Aussage über einen Verschluß möglich ist.

Der Erfindung liegt die Aufgabe zugrunde, die Zuverlässigkeit des eingangs genannten Verfahrens zum Prüfen von Behälterverschlüssen zu verbessern.

Erfindungsgemäß wird diese Aufgabe dadurch gelöst, daß die mechanischen Schwingungseigenschaften der Verschlüsse zusätzlich vor deren Anbringung an den Behältern ermittelt werden und daß der akzeptable Bereich der Werte, die nach dem Anbringen der Verschlüsse an den Behältern ermittelt werden, in Abhängigkeit von den Schwingungseigenschaften gewählt werden, die vor dem Anbringen der Verschlüsse ermittelt wurden.

Mittels der ersten, vor dem Anbringen der Verschlüsse stattfindenden Prüfung der Verschlüsse, die dabei noch als Verschlußrohlinge vorliegen, kann beispielsweise durch Frequenzmessung die Materialstärke oder durch Messung der Dämpfung die Dicke der Compound-Schicht ermittelt werden. Es hat sich gezeigt, daß Verschlüsse, die mit Rohlingen hergestellt werden, die gleiche Materialstärke, Materialzusammensetzung, Dicke des Compounds usw. haben, bei der zweiten Prüfung Meßwerte liefern, die nur in einem sehr engen Bereich streuen, wenn der Verschluß ordnungsgemäß sitzt, der Behälterinnendruck, die Füllstandshöhe usw. stimmen. Schwierigkeiten, die sich in der Praxis dadurch ergeben, daß die Verschlußrohlinge voneinander abweichen, lassen sich dadurch beheben, daß zunächst in einer ersten Prüfung, die vor dem Anbringen der Verschlüsse an den Behältern stattfindet, die Eigenschaften der Verschluß-Rohlinge untersucht werden. Es genügt dazu, wenn die Schwingungseigenschaften der Rohlinge festgestellt werden, z.B. die Frequenz der mechanischen Schwingung und deren Dämpfung. Anhand von Wertetabellen, in denen die vor und nach dem Anbringen der Verschlüsse ermittelten Schwingungsmerkmale einander zugeordnet werden, läßt sich dann ein sehr enger Bereich von akzeptablen Meßwerten für eine größere Anzahl von voneinander abweichenden Verschlüssen festlegen.

Grundsätzlich sind zwei Ausführungsformen des erfindungsgemäßen Verfahrens möglich:

Bei der ersten Ausführungsform geht man davon aus, daß man es mit einer begrenzten Anzahl, z.B. vier, verschiedenen Typen von Verschlußrohlingen zu tun hat. Die erste Prüfung der Verschlüsse erfolgt daher nur mit dem Ziel festzustellen, um welchen Typ es sich bei dem jeweiligen Verschluß handelt. Bei der zweiten, nach dem Anbringen des Verschlusses erfolgenden Prüfung wird dann festgestellt, ob der betreffende Verschluß Schwingungswerte innerhalb des für diesen Typ geltenden Bereichs von akzeptablen Werten hat.

Bei der zweiten Ausführungsform werden bei der ersten Prüfung des Verschlußrohlings bestimmte Schwingungsmerkmale, z.B. die Eigenfrequenz und das Zeitintegral der Amplitude gemessen. Für die zweite Messung werden dann die akzeptablen Werte oder Wertebereiche in Abhängigkeit von den bei der ersten Prüfung gemessenen Werten gewählt, z.B. eine Frequenzerhöhung zwischen 10 und 20% oder Frequenzverschiebung von 500 Hz und eine Reduzierung des Zeitintegrals der Amplitude um 30%. Zwischen den Werten der ersten Messung und denen der zweiten Messung wird dabei eine zuvor empirisch ermittelte Korrelation hergestellt.

Beide Ausführungsformen können auch in der Weise kombiniert werden, daß bei der ersten Prüfung die Verschlußrohlinge nach verschiedenen Typen unterschieden werden und dann für jeden Typ eine bestimmte Korrelation zwischen den Meßwerten der ersten und der zweiten Prüfung angewendet wird.

Das erfindungsgemäße Verfahren eignet sich besonders zur Verfeinerung des in der älteren Anmeldung DE 197 36 869.7 beschriebenen Verfahren, und zwar insbesondere zur Bestimmung des Luftvolumens und damit des Restsauerstoffs in Getränkeflaschen. Diese Prüfung ist vorallem bei Bier wichtig. Bei dem in der älteren Anmeldung DE 197 36 869.7 beschriebenen Verfahren erfolgt die Analyse der mechanischen Schwingungen unmittelbar nach dem Aufbringen des Verschlusses, bevor in dem Behälter eine wesentliche Änderung des Innendrucks stattfindet. Diese Schwingungsanalyse ist beim erfindungsgemäßen Verfahren die zweite Prüfung.

Das erfindungsgemäße Verfahren ist jedoch auch bei Prüfverfahren anwendbar, bei denen die mechanischen Schwingungen erst nach einer gewissen Zeitspanne nach dem Aufbringen des Verschlusses analysiert und ausgewertet werden. Voraussetzung hierfür ist, daß der Weg eines Verschlusses und der Flasche, an der er angebracht wird, verfolgt werden kann. Hierzu gibt es bekannte Verfahren wie sie zum Verfolgen einer Flasche von einer Inspektionsvorrichtung zu einer Ausleitvorrichtung eingesetzt werden.

Insbesondere bei der Prüfung eines Verschlusses auf dichten Sitz ist es zweckmäßig, die zweite Prüfung oder eine zusätzliche Prüfung im zeitlichen Abstand von der Anbringung des Verschlusses durchzuführen, um einen in der Zwischenzeit aufgetretenen Druckabfall feststellen zu können. Z.B. kann es notwendig sein, den Innendruck vor und nach dem Pasteurisieren des Behälterinhalts zu messen. In einer Pasteurisiereinrichtung befindet sich dabei eine sehr große Anzahl von Behältern in ungeordneter Reihenfolge. Um dennoch die einzelnen Behälter identifizieren zu können, müssen diese markiert werden. Hierzu können die Verschlüsse oder die verschlossenen Flaschen mit einer Markierung in Klarschrift oder in Strichcode versehen werden. Diese Markierung kann sichtbar oder beispielsweise nur unter UV-Licht erkennbar sein. Besonders geeignet ist eine magnetische Markierung wie sie in der gleichzeitig eingereichten internationalen Patentanmeldung "Verfahren zum Prüfen von Behälterverschlüssen" (= DE-Patentanmeldung 198 34 185.7) beschrieben ist.

Das erfindungsgemäße Verfahren eignet sich sowohl für Kronkorken, die aufgecrimpt werden, als auch für Schraubverschlüsse, deren Gewinde durch Anrollen erst geformt wird, und für TwistOff-Verschlüsse und für Dosendeckel. Vorrichtungen zum Aufbringen von Verschlüssen auf Getränkeflaschen, sogenannte Verschließer, bestehen im allgemeinen aus mehreren Verschließorganen, z.B. Crimp- bzw. Anrollorganen. Es wurde festgestellt, daß die einzelnen Verschließorgane in ihrer Arbeitsweise geringfügig voneinander abweichen und Verschlüsse mit unterschiedlichen Werten der Abklingzeit, der Energie und der Frequenz des Schwingungsmusters herstellen, wie in der oben erwähnten älteren Anmeldung DE 197 36 869 beschrieben ist. Vorzugsweise werden daher für jedes Verschließorgan eigene Wertetabellen oder Korrelationswerte angewendet.

Ein Ausführungsbeispiel der Erfindung wird nachfolgend anhand der Zeichnung erläutert: Es zeigen:

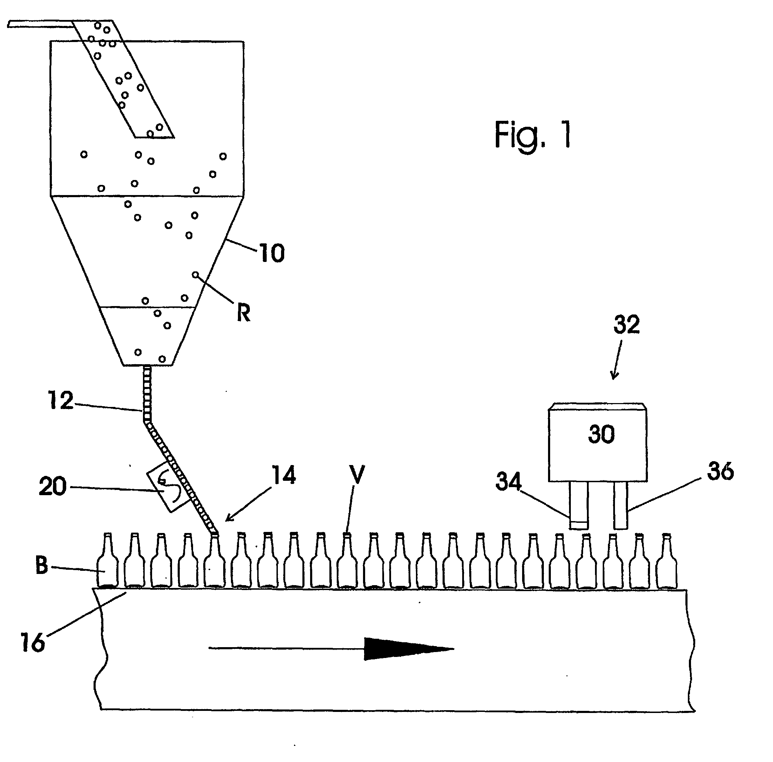

- Fig. 1: eine Vorrichtung zum Prüfen von Behälterverschlüssen in einer schematischen Darstellung und

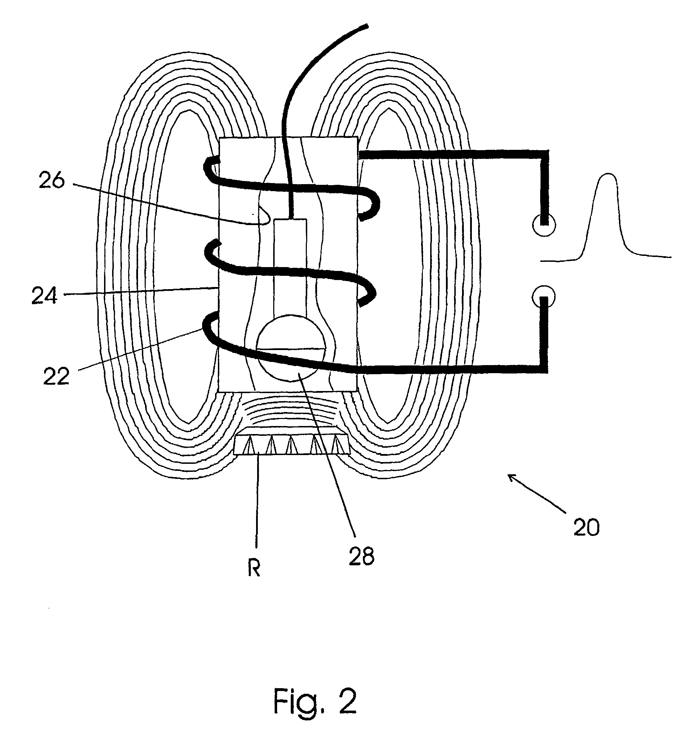

- Fig. 2: eine Prüfeinrichtung für Verschlußrohlinge.

Die Verschlußrohlinge R, wobei es sich hierbei um Kronkorkverschlüsse handelt, werden in einen Vibrationstrichter 10 gegeben, der von bekannter Bauart ist und daher nicht näher beschrieben wird. Aus dem Vibrationstrichter 10 gelangen die einzelnen Verschlußrohlinge R auf eine Zuführrutsche 12, auf der sie einer Verschließvorrichtung 14 zugeführt werden. Die Verschließvorrichtung 14 hat mehrere, z.B. zwanzig, Verschließorgane zum gleichzeitigen Verschließen einer entsprechenden Anzahl von Behältern B, bei denen es sich hier um 0,5 l Getränkeflaschen handelt. Die Verschließvorrichtung 14 ist ebenfalls von üblicher Bauart und wird daher nicht näher beschrieben.

Während sich die Verschlußrohlinge R auf der Zuführrutsche 12 zur Verschließvorrichtung 14 bewegen, werden sie mittels einer ersten Prüfeinrichtung 20 geprüft. Die Prüfeinrichtung 20 enthält eine Magnetspule 22, deren Achse rechtwinklig zur Ebene des Verschlußrohlings R steht. Die Magnetspule 22 enthält einen Kern 24 mit einer axialen Bohrung 26, an deren dem Verschlußrohling R zugewandten Ende ein Mikrophon 28 angeordnet ist. Eine solche Prüfeinrichtung ist aus DE-A-196 46 685 bekannt. Mittels eines kurzen von der Magnetspule 22 erzeugten magnetischen Impulses wird in dem Verschlußrohling R eine mechanische Schwingung angestoßen, die durch das Mikrophon 28 aufgenommen wird. Das von dem Mikrophon 28 aufgenommene Schwingungssignal wird in an sich bekannter Weise bezüglich Frequenz, Amplitude, Dämpfung und Energieinhalt, d.h. dem Zeitintegral der Amplitude, analysiert. Das Ergebnis der Analyse des Verschlußrohlings R wird einem Rechner 30 zugeführt.

Nach der Analysierung werden die Verschlußrohlinge in der Verschließvorrichtung 14 auf die Behälter B aufgebrachten. Die Behälter B werden auf einem Transportband 16, z.B. einem Gliederkettenförderer, transportiert und gelangen nach der Verschließvorrichtung 14 zu einer zweiten Prüfeinrichtung 32, die in der Anordnung und im Aufbau der Meßeinrichtung entspricht, die in DE-A-196 46 685 und DE-A-197 36 869 beschrieben ist. Mittels der zweiten Prüfeinrichtung 32 werden die Schwingungswerte der Verschlüsse V ermittelt, die auf den Behältern B angebracht sind. Die Prüfeinrichtung 32 enthält Einrichtungen zur Druckkontrolle 34 und zur Füllstandskontrolle 36.

Die Signale der ersten und zweiten Prüfeinrichtung 20, 32 werden in dem Rechner 30 verarbeitet, der einen nicht dargestellten Auswerfer steuert, um Behälter B mit ungenügender Füllung, undichtem Verschluß V oder sonstigen festgestellten Fehlern aus dem Strom der Behälter B auszusondern.

Die von der ersten Prüfeinrichtung 20 erhaltenen Signale dienen dazu, die Eigenschaften des Verschlußrohlings R festzustellen. Geringfügige Abweichungen in der Materialdicke oder der Stärke des Compounds beeinflussen die Frequenz bzw. Dämpfung der in dem Verschlußrohling R mittels der ersten Prüfeinrichtung 20 und dem angebrachten Verschluß V mittels der zweiten Prüfeinrichtung 32 durch einen magnetischen Impuls angestoßenen Schwingung.

Bei einer ersten Variante der Signalverarbeitung geht man davon aus, daß ein Getränkeabfüllbetrieb Verschlußrohlinge R von einer bestimmten Anzahl, beispielweise vier Herstellern, bezieht und daß die Verschlußrohlinge R jedes Herstellers im wesentlichen einheitliche Eigenschaften aufweisen. Es genügt in einem solchen Fall die Verschlußrohlinge R entsprechend zu klassifizieren. Da die Verschlüsse einer Klasse im wesentlichen gleiche Eigenschaften haben, streuen die bei der zweiten Prüfung erhaltenen Meßwerte nur sehr wenig, die Verschlüsse innerhalb derselben Klasse und nur gute oder akzeptable Verschlüsse betreffen. Schlechte oder inakzeptable Verschlüsse können dadurch bei der zweiten Prüfung mit einer hohen Sicherheit erkannt werden.

Selbstverständlich ist es notwendig, eine Zuordnung zwischen der ersten und zweiten Prüfung vorzusehen, indem der weitere Weg jedes Verschlußrohlings R nach der ersten Prüfung verfolgt wird, so daß bei der zweiten Prüfung eines aufgebrachten Verschlusses V der Rechner weiß, wie der betreffende Verschlußrohling R bei der ersten Prüfung klassifiziert wurde. Diese Verfolgung des Weges jedes Verschlußrohlings R kann anhand der bekannten Anzahl von Verschlußrohlingen zwischen der ersten Prüfeinrichtung 20, innerhalb der Verschließvorrichtung 14, des Arbeitstaktes der Verschließvorrichtung 14 und der bekannten Anzahl von Behältern zwischen der Verschließvorrichtung 14 und der zweiten Prüfeinrichtung 32 erfolgen. Alternativ oder unterstützend kann der Weg der Verschlußrohlinge R und der aufgebrachten Verschlüsse V mittels einer CCD-Kamera erfolgen.

Eine andere Möglichkeit der Verarbeitung der Meßsignale besteht darin, daß ein bestimmter Meßwert der ersten Prüfung, z.B. die Frequenz der Grundschwingung des Verschlußrohlings R mit der Frequenz der Grundschwingung des aufgebrachten Verschlusses V korreliert wird, indem z.B. der Bereich akzeptabler Werte der Frequenz eines aufgebrachten Verschlusses V um den Faktor 1,3 bis 1,35 höher als die Frequenz des entsprechenden Verschlußrohlings R liegen muß. Diese Korrelation kann auch mehrdimensional unter Einbeziehung der Amplitude, der Schwingungsdämpfung oder des Energieinhalts der Schwingung sein.

Beide Verfahren lassen sich auch kombinieren, so daß die Verschlußrohlinge klassifiziert werden und zusätzlich innerhalb jeder Klasse durch eine Korrelation der bei der ersten und zweiten Prüfung erhaltenen Meßwerte eventuelle geringe Abweichungen innerhalb jeder Klasse von Verschlußrohlingen R berücksichtigt werden und dadurch die Streubreite der akzeptablen Werte weiter reduziert wird.

Eine übliche Verschließvorrichtung enthält mehrere, z.B. zwanzig, Verschließorgane. Die einzelnen Verschließorgane bringen die Verschlüsse mit etwas voneinander abweichender Verschließkraft auf die Behälter auf. Akzeptable Verschlüsse können daher unterschiedlich fest an den Behältern angebracht sein. Auch dies führt zu einer Streuung der bei der zweiten Prüfung erhaltenen Meßwerte. Die leicht voneinander abweichende Arbeitsweise der einzelnen Verschließorgane kann bei der Auswertung der bei der zweiten Prüfung erhaltenen Meßwerte ebenfalls berücksichtigt werden, wodurch die Streubreite der akzeptablen Werte weiter eingeengt werden kann. Zusätzlich zur Klassifizierung der Verschlußrohlinge R und/oder dem Parameterfeld, das die Meßwerte der ersten und der zweiten Prüfung korreliert, kann daher noch berücksichtigt werden, von welchem Verschließorgan dieser Verschluß V aufgebracht wurde.

Bei der Prüfung auf Dichtigkeit des aufgebrachten Verschlusses V kann man so vorgehen, daß eine möglichst lange Zeitspanne nach dem Verschließen abgewartet wird, so daß der Druck innerhalb von Behältern B mit undichten Verschlüssen V möglichst. deutlich abfällt. Werden Fruchtsäfte beispielsweise nach dem Verschließen pasteurisiert, so ist es sinnvoll, den Innendruck der Behälter nach dem Pasteurisieren zu messen. Zum Pasteurisieren durchlaufen die Behälter B ungeordnet und langsam innerhalb von beispielsweise 30 Minuten die Pasteurisiereinrichtung. Um die bei der zweiten Prüfung nach der Pasteurisiereinrichtung erhaltenen Meßwerte den bei der ersten Prüfung vor der Verschließvorrichtung 14 festgestellten Klassifizierung oder sonstigen Meßwerten des betreffenden Verschlußrohlings R zuordnen zu können, ist es dann notwendig, die Verschlußrohlinge R, Verschlüsse V bzw. Behälter B zu markieren. Diese Markierung kann mittels sichtbarer oder unsichtbarer Farbe erfolgen. Ein besonders bevorzugtes Verfahren ist das in der gleichzeitig eingereichten internationalen Patentanmeldung "Verfahren zum Prüfen von Verschlüssen" (= DE-Patentanmeldung 198 34 185.7) beschriebene Verfahren zur magnetischen Markierung von Behälterverschlüssen.

## Patentansprüche

1. Verfahren zum Prüfen von verschlossenen Behältern (B), wobei Werte der Schwingungseigenschaften der an den Behältern (B) angebrachten Verschlüsse (V) ermittelt werden und mit Bereichen für akzeptable Werte verglichen werden und ein Signal erzeugt wird, das aussagt, ob der ermittelte Wert innerhalb oder außerhalb des Bereichs akzeptabler Werte liegt, **dadurch gekennzeichnet, daß**
- die Schwingungseigenschaften der Verschlußrohlinge (R) zusätzlich bereits vor deren Anbringung an den Behältern (B) ermittelt werden und
- **daß** der Bereich akzeptabler Werte der an den Behältern (B) angebrachten Verschlüsse (V) in Abhängigkeit von den Schwingungseigenschaften des entsprechenden Verschlußrohlings (R) gewählt wird.

2. Verfahren nach Anspruch 1, **dadurch gekennzeichnet, daß** die Verschlußrohlinge (R) in Abhängigkeit von ihren Schwingungseigenschaften klassifiziert werden.

3. Verfahren nach Anspruch 1 oder 2, **dadurch gekennzeichnet, daß** der Bereich akzeptabler Werte der Schwingungswerte der Verschlüsse (V) zu den bei der ersten Prüfung ermittelten Werten der Schwingungseigenschaften und gegebenenfalls der Klassifizierung der betreffenden Verschlußrohlinge (R) korreliert sind.

4. Verfahren nach einem der Ansprüche 1 bis 3, **dadurch gekennzeichnet, daß** eine Verschließvorrichtung (14) mit mehreren Verschließorganen verwendet wird und daß bei der Auswertung der Schwingungswerte der Verschlüsse (V) für jedes Verschließorgan ein eigener Bereich akzeptabler Werde zugrundegelegt wird.

## Claims

1. Process for testing closed containers (B), comprising ascertaining values of the oscillation properties of the closures (V) attached to the containers (B) being, comparing the values with ranges for acceptable values, and producing a signal which states whether the ascertained value lies within or outside the range of acceptable values, **characterized in that**
- the oscillation properties of the closure blanks (R) are already ascertained before their attachment to the containers (B) and
- the range of acceptable values of the closures (V) attached to the containers (B) is chosen according to the oscillation properties of the corresponding closure blank (R).

2. Process according to claim 1, **characterized in that** the closure blanks (R) are classified according to their oscillation properties.

3. Process according to claim 1 or 2, **characterized in that** the range of acceptable values of the oscillation values of the closures (V) is correlated to the values of the oscillation properties ascertained in the first test and optionally the classification of the closure blanks (R) concerned.

4. Process according to one of claims 1 to 3, **characterized in that** a closing device (14) with several closing organs in used and that the evaluation of the oscillation values of the closures (V) is carried out using an individual range of acceptable values for each closing organ.

## Revendications

1. Procédé de vérification de récipients (B) fermés, selon lequel des valeurs des propriétés de vibration des fermetures (V) posées sur les récipients (B) sont relevées et sont comparées à des fourchettes correspondant à des valeurs acceptables et il est produit un signal qui indique si la valeur relevée est à l'intérieur ou à l'extérieur de la fourchette de valeurs acceptables, **caractérisé en ce que**
- les propriétés de vibration des fermetures à l'état avant pose (R) sont en outre relevées déjà avant la pose de celles-ci sur les récipients (B) et
- **en ce que** la fourchette de valeurs acceptables des fermetures (V) posées sur les récipients (B) est choisie en fonction des propriétés de vibration des fermetures à l'état avant pose (R) correspondantes.

2. Procédé suivant la revendication 1, **caractérisé en ce que** les fermetures à l'état avant pose (R) sont classées en fonction de leurs propriétés de vibration.

3. Procédé suivant la revendication 1 ou 2, **caractérisé en ce que** la fourchette de valeurs acceptables des valeurs de vibration des fermetures (V) font l'objet d'une corrélation avec les valeurs des propriétés de vibration relevées lors de la première vérification et éventuellement avec la classification des fermetures à l'état avant pose (R) concernées.

4. Procédé suivant l'une des revendications 1 à 3, **caractérisé en ce qu'**un dispositif de fermeture (14) comportant plusieurs organes de fermeture est utilisé et **en ce que**, lors de l'exploitation des valeurs de vibration des fermetures (V), une fourchette propre de valeurs acceptables sert de base pour chaque organe de fermeture.
